(19) Europäisches Patentamt
European Patent Office
Office européen des brevets

(11) EP 0 495 606 B1

(12) EUROPEAN PATENT SPECIFICATION

(45) Date of publication and mention
of the grant of the patent:
**09.04.1997 Bulletin 1997/15**

(51) Int Cl.⁶: **G06K 15/00, G06K 15/10**

(21) Application number: **92300274.5**

(22) Date of filing: **13.01.1992**

(54) **Printer control method**

Verfahren zum Steuern eines Druckers

Méthode de contrôle d'un imprimante

(84) Designated Contracting States:
**DE GB**

(30) Priority: **14.01.1991 US 640787**

(43) Date of publication of application:
**22.07.1992 Bulletin 1992/30**

(73) Proprietor: **NCR International, Inc.**
**Dayton, Ohio 45479 (US)**

(72) Inventors:
• **Roddy, Dale William**
**North Huntington, Pennsylvania 15642 (US)**
• **Maginnity, Kathleen**
**Trumansburg, New York 14886-0421 (US)**
• **Sponable, Richard Charles**
**Newfield, New York 14867 (US)**

(74) Representative: **Robinson, Robert George**
**International Intellectual Property Department,**
**NCR LIMITED,**
**915 High Road,**
**North Finchley**
**London N12 8QJ (GB)**

(56) References cited:
**EP-A- 0 265 160** **US-A- 4 761 085**

**Description**

This invention relates to a method for controlling a printer. The invention has a particular application to retail printers, that is, printers which print characters at more than one station, for example, journal, receipt and validation print stations, but is not restricted to such application.

Characters printed by retail printers are commonly composed of dots which are formed by actuating a plurality of wires, ink jets, heating elements or other printing devices which print less than an entire character at a time. A print carriage including selected printing devices is moved back and forth across a field which includes a journal station, a receipt station and a validation station which may coincide with either the journal station, the receipt station or both the journal and receipt stations. To increase the throughput of such printers, the printing operation may employ a technique known as logic seeking. In its most general form, logic seeking comprises positioning the print carriage to the closer end position of the next line to be printed. At the completion of a print line, a comparison of the current print line end position is made with the right and left end positions of the next line to be printed. The print carriage is then moved to the closer end position of the next line to be printed. It is apparent that logic seeking is important to the throughput of retail printers, particularly retail printers which may print in more than one station. Without logic seeking, the print carriage is moved to one side or the other of the printer even though the next line may have to be printed on the opposite side of the printer. It is also desirable to be able to vary the size of the characters which are printed. While size may be varied by providing single-width and double-width characters, it is also desirable to provide different pitches for the characters to be printed. Different pitches permit different length lines of characters to be printed for optimal readability in a given print space and also provide differing emphasis which is less pronounced than the differences between single-width and double-width characters.

US-A-4 761 085 discloses a method of controlling a printer to increase the through put by optimising the print head's movement between print lines. It determines whether it is quicker to position the print head at the left or right end position of the next print line. The method accounts for current print head position, the relative end positions of the next print line, the length of the next print line, current print head speed, the various acceleration and deceleration times and the turn around settling time for the print head.

It is an object of the present invention to provide a method of controlling a printer which enables characters to be printed at a selected one of a plurality of character pitches, while acheiving a high throughput.

Therefore, according to the present invention, there is provided a method of controlling a printer to print characters in response to print data representative of a line of characters to be printed comprising the following steps: determining a line start position and a line end position for said print data as a function of said print data and a print pitch selected from a plurality of print pitches to be used to print the line of characters; accessing a lookup table to determine printer synchronization points from the line start position end the line and position in combination with the selected print pitch, said line of characters being located between said printer synchronization points; determining the printer synchronization point nearer to a current position of a printing element of the printer; and moving said printing element to the nearer printer synchronization point to prepare the printer to print the line of characters represented by said print data at the selected print pitch.

One embodiment of the present invention will now be described by way of example, with reference to the accompanying drawings, in which:-

Fig. 1 is a diagrammatic representation of a retail printer/control terminal operable in accordance with the present invention;
Fig. 2 is a lookup table for operating an illustrative three pitch, three station retail printer in accordance with the present invention; and
Fig. 3 is a flow chart describing the operation of the present invention.

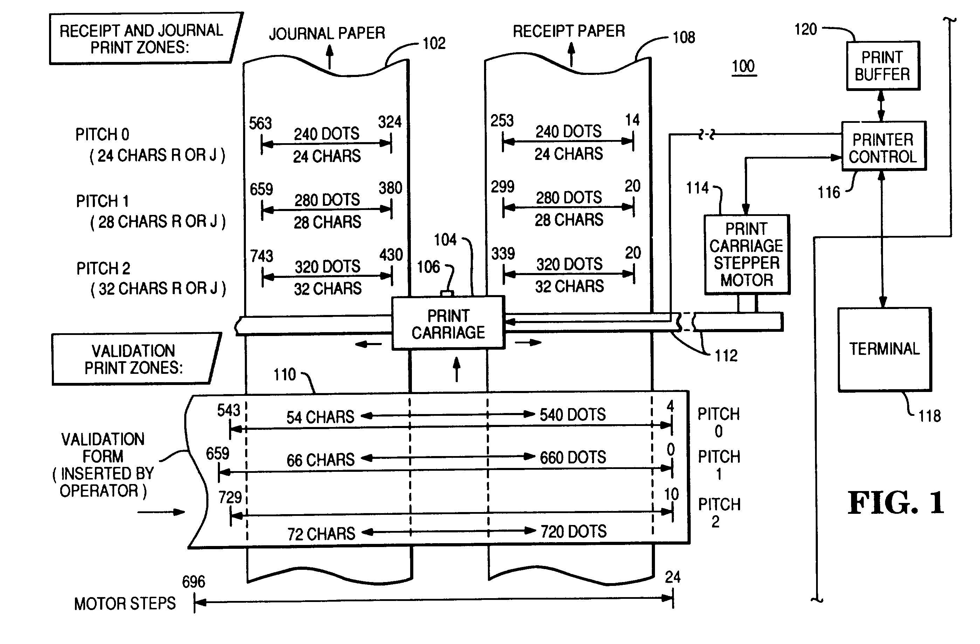

While the present invention is generally applicable to printer control, it is particularly applicable to a retail printer which prints characters in more than one-print station and accordingly will be described in such a multiple print station retail printer. In an illustrative retail printer 100 which is diagrammatically depicted in Fig. 1, three print stations are included. A journal station is defined by a strip of journal paper 102 which is advanced past a print carriage 104 which includes a print element 106. A receipt station is defined by a strip of receipt paper 108 which is similarly advanced past the print carriage 104. Finally, a validation station which in the illustrated embodiment extends across and beyond both the journal station 102 and the receipt station 108, is defined by a validation form 110 which is inserted by an operator of the retail printer and similarly advanced past the print carriage 104.

For each line of characters printed by the printer 100, the print carriage 104 is moved from left to right, referred to as the forward direction herein, or from right to left, referred to as the reverse direction herein. The print carriage 104 in the illustrated embodiment is secured to a drive belt 112 which is driven by a print carriage stepper motor 114 in response to step signals generated by a printer controller 116 which also controls operation of the print element 106.

The print element 106 can comprise a plurality of wires, ink jets, heating elements or other printing devices. A variety of retail printers are well known in the art. Since the detailed structure of a printer utilizing the present invention is not important to the invention, it will not be described herein. For additional structural details, reference can be made to U.S. Patent No. 4,989,487 which illustrates a three station retail printer.

The printer 100 is able to print characters in any of three selectable pitches which are defined relative to 51.2 mm print zones of the journal paper 102 and the receipt paper 108. Thus, three pitches - pitch 0, pitch 1, and pitch 2 are defined as 24, 28 and 32 characters per 51.2 mm print zone. As shown in Fig. 1, the print zones are defined in the journal station, the receipt station and the validation station by print dot numbers for each of the three pitches. The print dot numbers shown in Fig. 1 correspond to the dot numbers of each pitch which define the beginning and ending print positions for each of the print stations. For example, for pitch 1, printing in the receipt station on the receipt paper 108 is from print dot 299 to print dot 20 for printing in the forward direction.

For implementation of the printer control of the present invention, preferably all of the dots of one of the pitches, which is referred to as the base pitch, directly correspond to the motor steps which are numbered 696 to 24 in Fig. 1. In the illustrated embodiment of the present invention, the middle pitch, pitch 1, is selected as the base pitch, i.e. pitch 1 has print dots which coincide with the motor steps. It is noted that the dot numbers are not the same as the motor step numbers since there is an offset of 24 motor steps which, in the motor selected for the illustrated embodiment, is the number of steps required to accelerate the print carriage 104 to print speed and to decelerate the print carriage 104 after printing operations have been performed.

It should be apparent that the number of motor steps required for print carriage acceleration need not be equal to the number of motor steps required for deceleration and that the number of motor steps required for these operations is determined by the stepper motor which is selected for a given printer implementation. The motor selected for a working model of the illustrated embodiment is a 3.6 Degree Hybrid Stepping Motor which is commercially available from NMB Technologies Inc. of Chatsworth, California.

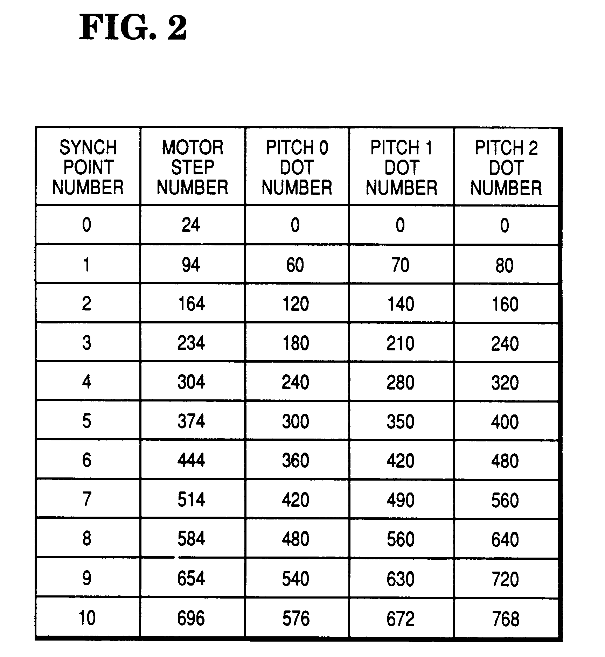

Further, it is preferred that other pitches provided for the printer correspond fractionally to the base pitch. For the illustrated embodiment the base pitch is pitch 1 as previously noted, pitch 0 corresponds to 6/7 of the base pitch, and pitch 2 correspond to 8/7 of the base pitch. Thus, defined dots of each of the pitches correspond to or coincide with defined motor steps and therefore the print carriage 104 can be physically positioned to the defined dots of each of the pitches by operation of the stepper motor 114 by application of the corresponding number of motor steps. Due to the direct correspondence of the step numbers of pitch 1 to the motor steps, all of the dot numbers of pitch 1 correspond directly to motor step numbers while only some of the dot numbers of the remaining pitches correspond directly to motor step numbers, see the lookup table of Fig. 2.

Different pitches are obtained from the printer 100 by operating the stepper motor 114 at different frequencies while printing the dots at the same frequency. For the illustrated embodiment, the print element 106 is operated at a frequency of 1050 hz and the print carriage stepper motor 114 is operated at: 1237 hz for pitch 0; 1050 hz for pitch 1; and, 924 hz for pitch 2. It should be apparent that the slower the print carriage 104 is moved, the more clustered and hence the narrower each character will be printed. On the other hand, the faster the print carriage 104 is operated the wider or more spaced out each character will be printed. The pitch changes of the present invention are thus seen to be horizontal pitch changes.

In addition to being able to print characters in two or more pitches, it is desirable to perform logic seeking to increase the through-put for the printer 100. One possibility of implementing logic seeking for the printer 100 based on the defined character pitch arrangement described above is to have the printer controller 116 perform the necessary calculations to relate the print dots for the various pitches to the positioning of the print carriage 104 or operating steps of the print carriage stepper motor 114. Once these calculations are performed, logic seeking is performed to increase through-put of the printer.

Unfortunately, the performance of the required calculations by the printer controller 116 consumes sufficient time as to substantially or totally nullify the printer performance improvements gained by the logic seeking operations. While a more powerful processor could be utilized for the printer controller 116, it would add to the expense of the printer 100 and would provide no other benefit for the printer 100 since its increased performance is not needed for the other printing operations.

In accordance with the present invention, multiple carriage pitches are related to one another and to the position of the print carriage 104 through the use of a lookup table. By constructing a lookup table formed in accordance with the previously described relationships among the character pitches, the print carriage positions and the motor steps, a more powerful processor is not required for the printer controller 116. Such a lookup table is illustrated in Fig. 2 for the three pitch arrangement described herein. While a three pitch arrangement is illustrated and described herein, it is noted that any reasonable number of character pitches can be implemented in accordance with the present invention.

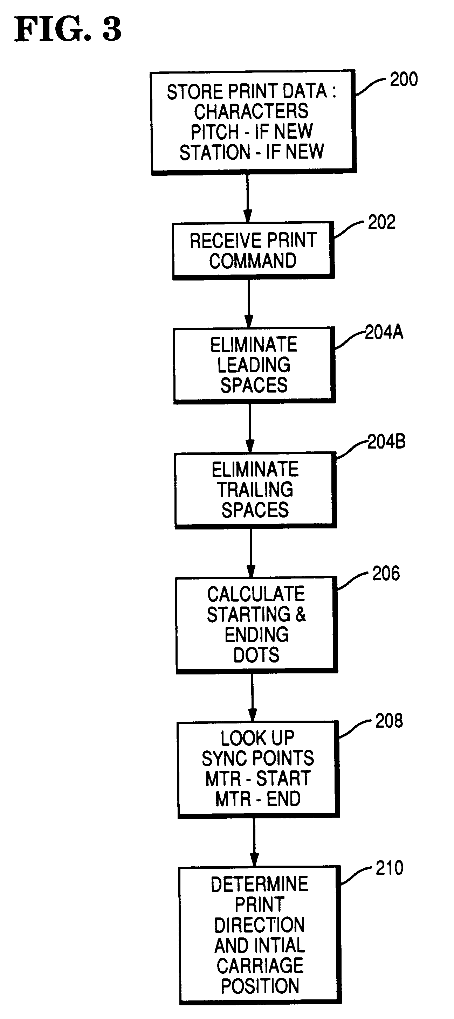

Operation of the multiple print station printer 100 will now be described with reference to the drawings. A terminal 118 which is illustrated in Fig. 1 as being external to the printer 100, sends control data including print data representative of a line of characters to be printed by the printer 100, the selected pitch if pitch is to be changed and the selected print station if the print station is to be changed. If no pitch signal or print station signal is sent to the printer 100, the printer 100 defaults to the last pitch selected and/or the last print station selected. If desired for a given application, the terminal 118 could form a portion of the printer 100. In any event, the terminal 118 transmits the print data to the printer controller 116 in the form of ASCII characters which are stored by the printer controller 116 in a print buffer 120 which preferably forms a portion of the memory available to the printer controller 116. See block 200 of Fig. 3.

The dot number of the starting characters of each print station (receipt, journal, and validation) are stored. The starting dot numbers of the print stations permit the printer controller 116 to store the print data in the correct area of the print buffer 120 for direct conversion of the ASCII print data to dot data. After the print data has been transmitted to the printer controller 116, a print command signal is sent, see block 202 of Fig. 3. Only after the print command signal is received by the printer controller 116 are any dot-related calculations performed.

The processing sequence for logic seeking that is followed after the print command is received begins with a function named ELIM_OR_PAD. The purpose of ELIM_OR_PAD function is to make the print line as short as possible by eliminating leading and trailing spaces from the print data, see blocks 204A and 204B of Fig. 3. For example, if the line of characters represented by the print data is to be indented from the leftmost print line of the station for which it is intended, the print data in ASCII might be:

| CHAR POSITION | 0 | 1 | 2 | 3 | 4 | 5 | 6 | 7 | 8 |
|---|---|---|---|---|---|---|---|---|---|
| | SP | SP | SP | SP | H | E | L | L | O [PRINT] |

linestart = 0
linend = 8
chcnt = 9

For this case, if the ELIM_OR_PAD function is not used, the printhead or print carriage 104 has to travel far enough to print 9 characters, even though the first four characters are spaces. The ELIM_OR_PAD function starts at the left side (start) of the ASCII data in the print buffer 120 and reviews the data to see whether the first character it encounters is a space. If it is not, the function then checks the right side (end) of the ASCII data using the same procedure.

However, if the first character is a space, the ELIM_OR_PAD function skips over the space by incrementing a linestart variable and decrementing a character count, chcnt, variable. Then the next character is checked. This procedure continues until a character other than a space is encountered. After passing through the ELIM_OR_PAD function, the above print line is:

| CHAR POSITION | 0 | 1 | 2 | 3 | 4 | 5 | 6 | 7 | 8 |
|---|---|---|---|---|---|---|---|---|---|
| | SP | SP | SP | SP | H | E | L | L | O [PRINT] |

linestart = 4
linend = 8
chcnt = 5

It is noted that the space characters are not actually deleted from the print buffer 120, but rather the variables describing the print data stored in the print buffer 120 are modified. Now, the printhead or print carriage 104 only needs to travel far enough to print 5 characters, nearly a 50% reduction in printhead or print carriage 104 travel time, and thus a corresponding increase in speed.

After the ELIM_OR_PAD function has been performed, the function VERT_TO_DOT is performed. The VERT_TO_DOT function uses the linestart, linend, and chcnt variables that describe the ASCII data in the print buffer 120, as well as the pitch variables to calculate the starting and ending dots to be printed for the line of characters represented by the print data, see block 206 of Fig. 3.

The VERT_TO_DOT function performs the following calculations:

$$dotcount = 10 * chcnt$$

wherein dotcount is the number of dots to be printed based on 10 dots per character.

$$dotend = startdot - (10 * linestart)$$

wherein dotend is the leftmost dot of the print line and startdot is the pitch variable which identifies the dot position where the leftmost dot of a line of characters represented by the print data should be printed for the selected print station and in the selected pitch. Since placement of the ASCII data in the print buffer 120 is also based on pitch variables that are related to startdot, the leftmost dot of the print line, dotend, is calculated to be offset from startdot by 10 dots per character times the number of characters, linestart, by which it is offset.

$$dotstart = dotend + 1 - dotcount$$

wherein dotstart is the rightmost dot that will be printed for the line of characters represented by the print data. After the VERT_TO_DOT function is performed, three variables - dotstart, dotend, and dotcount have been calculated to describe the outer boundaries of the dots that must be printed for the line of characters represented by the print data stored in the print buffer 120.

The next function which is performed is called SYNCH_DOTS. The SYNCH_DOTS function uses the three variables dotend, dotstart and dotcount to relate the motion of the print carriage 104 to the dots to be printed by using the lookup table shown in Fig. 2. The SYNCH_DOTS function is essential to the present invention to provide efficient logic seeking for multiple character pitches without consuming excessive amounts of time for computations. The SYNCH_DOTS function's first task is to look up a mtr_start variable based on the value of dotstart. Whereas dotstart is the rightmost dot that is to be printed, mtr_start is the rightmost position of the printhead or print carriage 104 at which the print carriage 104 must be moving at the correct printing velocity. Depending on the direction of print, the print carriage 104 must be fully accelerated by the time this position is reached, or if printing is in the other direction, the print carriage 104 will be decelerated after it passes this position.

To determine the value of mtr_start, the SYNCH_DOTS function begins searching the portion of the lookup table shown in Fig. 2 that corresponds to the currently selected pitch. In order to find the most efficient printer synchronization points, the search is started at the end of the table, i.e. at the largest dot number values. The table is then searched backwards, i.e. from the largest table entry to the smallest to find a table entry which is $\leq$ dotstart. This table entry corresponds to the appropriate synchronization point for the rightmost side of the line of characters represented by the print data. The value of dotstart is then set equal to the value in the table for this synchronization point. This adjustment of the dotstart value is possible since the only data which is loaded into a dot buffer is the actual data that must be printed, and all other locations will be blank. Therefore, spaces can actually be printed in order to line up the line of characters to be printed with the synchronization points.

The SYNCH_DOTS function next determines the mtr_start value which is determined from the lookup table using the previously determined synchronization point. The SYNCH_DOTS function accesses the motor step portion of the lookup table shown in Fig. 2 and retrieves the value at the motor step number pointed to by the synchronization point. In this way, the mtr_start value which is most efficient for this line of characters to be printed is determined.

A similar table look up process is performed to find an appropriate value of mtr_end based on the value of the dotend variable. Whereas dotend is the leftmost dot that is to be printed, mtr_end is the leftmost position of the printhead or print carriage 104 at which the print carriage 104 must be moving at the correct printing velocity. Depending on the direction of print, the print carriage 104 must be fully accelerated by the time this position is reached, or if printing is in the other direction, the print carriage 104 will be decelerated after it passes this position. For this case, the search through the table is started at the beginning or lowest value of dot numbers for the selected pitch. The search is continued until a table entry is found which is $\geq$ (dotend + 1). Again, when the appropriate table entry is found, dotend is set equal to the table entry, and the corresponding value for mtr_end is also looked up, see block 208 of Fig. 3.

The printer controller 116 now has the values for dotstart, dotend, mtr_start, and mtr_end which will be used to print the line of characters represented by the print data stored in the print buffer 120. The SYNCH_DOTS function now calculates dotcount and mtr_count as follows:

$$dotcount = dotend - dotstart$$

$$mtr\_count = mtr\_end - mtr\_start$$

The SYNCH_DOTS function is then complete, the feeding of paper in the selected print station begins and a function named BUILD_DOT_BUFFER converts the ASCII data in the print buffer 120 to dot data for printing. The BUILD_DOT_BUFFER function will not be described herein since it is not related to the present invention and can comprise any one of a number of well known procedures for the operation of dot-based printers (dot matrix, ink-jet, etc). Suffice it to say that the BUILD_DOT_BUFFER function converts the ASCII data to an image of the dots to be printed.

As the paper feeding continues, a LOGIC_SEEK function begins to operate. The LOGIC_SEEK function uses the values of mtr_start, mtr_end and a variable dotcarr which tracks the current position of the print carriage 104 to calculate the best direction for printing the line of characters represented by the print data and also moves the print carriage 104 to the appropriate starting position. By the time the LOGIC_SEEK function has been performed, the paper feed is completed and the BUILD_DOT_BUFFER function has also been completed. By performing the paper feed concurrently with the operation of the BUILD_DOT_BUFFER function, and then concurrently with the performance of the LOGIC_SEEK function, further gains in printer through-put are obtained.

The fact that the print carriage 104 cannot be started or stopped instantaneously but must be brought up to speed or accelerated to the appropriate steady-state printing speed and slowed down or decelerated after printing is accounted for and built into the LOGIC_SEEK function. In the motor used in a working embodiment of a printer including the present invention, both acceleration and deceleration of the print carriage 104 require 24 steps of the print carriage stepper motor 114. Accordingly, the constant 24 appears frequently in the LOGIC_SEEK function. The acceleration and deceleration times or steps may of course be different for different motors.

For the following description of operation of the LOGIC_SEEK function, reference is once again made to Fig. 1 which illustrates the printer layout applicable for this LOGIC_SEEK function. The maximum number of steps for the print carriage stepper motor 114 or print carriage 104 is fixed by the physical dimensions of the printer 100. The numbering of the motor steps, as well as choosing which direction to call forward and reverse is completely arbitrary; however, once decided, they must be used consistently. Thus, for the illustrated multiple station retail printer 100, when the print carriage 104 is moved from left-to-right, it is referred to as moving in the forward direction and the motor step count or print carriage 104 position number is decremented. Similarly, when the print carriage 104 is moved from right-to-left, it is referred to as moving in the reverse direction and the motor step count or print carriage 104 position number is incremented. These conventions are built into the LOGIC_SEEK function.

Thus, the LOGIC_SEEK function includes information defining the layout of the printer 100 such as forward print carriage direction, reverse print carriage direction, motor step numbering, etc. The LOGIC_SEEK function also includes information defining performance characteristics of the printer 100 such as the required number of acceleration steps and deceleration steps for the print carriage stepper motor 114. The printer layout and performance information is used in conjunction with information about each particular line of characters to be printed such as mtr_start and mtr_end points to determine which direction to print and the initial positioning of the print carriage 104.

The LOGIC_SEEK function chooses the print direction based on the most efficient direction of travel. To this end, it tests a number of cases in sequence to determine how to print the line. For each case, an example of mtr_start, mtr_end and dotcarr values will be given together with the resulting printing decisions for each example. Note that for the illustrated implementation of the LOGIC_SEEK function, the cases listed are exhaustive, and case-checking proceeds from best-case to worst-case in terms of print speed; see block 210 of Fig. 3.

CASE 1: dotcarr + 24 ≤ mtr_start

For case 1, the print carriage 104 can be accelerated in the reverse direction to print the line of characters since there is at least enough room to accelerate the print carriage 104 before the mtr_start position is reached.

```
mtr_end (450)                              mtr_start (48)

       ----------------------------------

                                           dotcarr (20)
```

CASE 2: dotcarr - 24 ≥ mtr_end

For case 2, the print carriage 104 can be accelerated in the forward direction to print the line of characters since there is at least enough room to accelerate the print carriage 104 before the mtr_end position is reached.

```
mtr_end (450)                              mtr_start (48)

----------------------------------------------
               dotcarr (474)
```

CASE 3: dotcarr + 24 ≥ mtr_end

For case 3, the print carriage 104 is close to mtr_end, within 24 motor steps, but on the wrong side (right side) of mtr_end to just accelerate the print carriage 104 and print the line of characters. For case 3, the print carriage 104 is accelerated and decelerated in the reverse direction, 48 motor steps of total motion, which positions the print carriage 104 at least 24 steps to the left of mtr_end such that the print carriage 104 can then be accelerated in the forward direction to print the line of characters.

```
mtr_end (450)                              mtr_start (48)

----------------------------------------------
             dotcarr (440)
```

CASE 4: dotcarr - 24 ≤ mtr_start

Case 4 is similar to case 3, however the print carriage 104 is close to mtr_start, within 24 motor steps, but on the wrong side (left side) of mtr_start to just accelerate the print carriage 104 and print the line of characters. For case 4, the print carriage 104 is accelerated and decelerated in the forward direction, 48 motor steps of total motion, which positions the print carriage 104 at least 24 steps to the right of mtr_start such that the print carriage 104 can then be accelerated in the reverse direction to print the line of characters.

```
mtr_end (450)                              mtr_start (48)

----------------------------------------------
                                    dotcarr (56)
```

CASE 5: (mtr_end - dotcarr) < (dotcarr - mtr_start)

For case 5, the print carriage 104 is closer to mtr_end than it is to mtr_start, but does not fall into one of the above categories, cases 1-4. For case 5 the print carriage 104 is accelerated and decelerated in the reverse direction to position the print carriage 104 at mtr_end + 24. This positioning permits the print carriage 104 to accelerate in the forward direction and print the line of characters.

```
mtr_end (450)                              mtr_start (48)

----------------------------------------------
              dotcarr (320)
```

CASE 6: DEFAULT CASE - Does not meet any of cases 1-5

Case 6 is handled in a manner similar to case 5, but in the opposite direction. The print carriage 104 is accelerated and decelerated in the forward direction to position the print carriage 104 at mtr_start - 24. This positioning permits the print carriage 104 to be accelerated in the reverse direction to print the line of characters.

```
mtr_end (450)                          mtr_start (48)

       ------------------------------------

                                       dotcarr (180)
```

The LOGIC_SEEK function has now positioned the print carriage 104 to print the line of characters in a direction which is defined by a direction bit which is set to indicate the forward direction or not set to indicate the reverse direction. Also a two-byte variable tmp1:tmp2 contains the number of steps required at the steady-state speed to reach the mtr_start or mtr_end position, whichever is the starting point, after acceleration. For example, if LOGIC_SEEK is completed with the variables set as:

```
mtr_end = 450
mtr_start = 48
dotcarr = 20
forward = 0 (indicates reverse)
tmp1:tmp2 = 4
```

the print carriage 104 is accelerated in the reverse direction, after which the carriage position is 44 (20 + 24 acceleration steps). The print carriage is then moved 4 (tmp1:tmp2) motor steps to the position 48, which is the starting point for printing. The print controller 116 then goes into a main printing loop and moves the print carriage 104 and activates the print element 106 to print dots concurrently with the motion of the print carriage 104. As motor steps are taken, the mtr_count variable is decremented. As columns of dots are printed, the dotcount variable is decremented. When dotcount reaches 0, no more dots are printed. When mtr_count reaches 0, carriage deceleration is begun. Dot printing and motor step motion are performed independently, but concurrently, as the line of characters is printed. The only synchronization between the two is at the start of the line. Since they are independent, either activity may finish first. When both activities have been completed, the printer 100 then resumes communication with the terminal 118 to receive control data for the next line of characters to be printed.

Pitch variables store a number of constants which define each individual pitch. These constants are found in the lookup table of Fig. 2 although not shown in the drawing. The constant define all the necessary parameters for the different pitches. The constants necessary to define a pitch are:

PITx_R_CHRS    The number of characters that can be printed on the receipt or journal stations in this particular pitch.

PITx_R    The number of dots that can be printed on the receipt or journal stations in this particular pitch. Is set to be 10 * PITx_R_CHRS (10 dots per character).

PITx_V_CHRS    The number of characters that can be printed on the validation station in this particular pitch.

PITx_V    The number of dots that can be printed on the validation station in this pitch. Set to 10 * PITx_V_CHRs.

PITx_STARTDOT    The dot number position that defines the leftmost dot on any station for this pitch. This is used in combination with the lookup table of Fig. 2 to align the print zones to the left and right sides of the printer.

PITx_RSTART    The starting dot number for the receipt station in this pitch.

PITx_ROFF_C    The character offset from the left side of the printer where the receipt print zone starts for this pitch. Tells where in the print buffer 120 to store incoming characters from the terminal 118 that are to be printed on the receipt.

PITx_JSTART    The starting dot number for the journal station in this pitch.

PITx_JOFF_C    The character offset from the left side of the printer where the journal print zone starts for this pitch. Tells where in the print buffer 120 to store incoming characters from the terminal 118 that are to be printed on the journal.

PITx_VSTART    The starting dot number for the validation station in this pitch.

PITx_VOFF_C    The character offset from the left side of the printer where the validation print zone starts for this pitch. Tells where in the print buffer 120 to store incoming characters from the terminal 118 that are to be printed on the validation form.

PITx_SYNCH_TABL Gives the address of the start of the column of the lookup table of Fig. 2 that corresponds to this pitch.

PITx_ACCEL_TABL Gives the address of the start of the carriage motor acceleration table for this pitch. Since the pitches are printed using different carriage motor speeds, the acceleration profiles are different for each pitch.

PIT_xDECEL_TABL Gives the value of the steady state carriage speed for each pitch. This number is 1/2 of the number of microseconds for each carriage step.

Thus, there has been described a printer which provides multiple character pitches selectable on the fly with no mechanical adjustments to the printer and also has a high throughput derived from a "logic seeking" type of control.

## Claims

1. A method of controlling a printer to print characters in response to print data representative of a line of characters to be printed, comprising the following steps: determining a line start position and a line end position for said print data as a function of said print data and a print pitch selected from a plurality of print pitches to be used to print the line of characters; accessing a lookup table to determine printer synchronization points from the line start position and the line end position in combination with the selected print pitch, said line of characters being located between said printer synchronization points; determining the printer synchronization point nearer to a current position of a printing element (106) of the printer; and moving said printing element (106) to the nearer printer synchronization point to prepare the printer to print the line of characters represented by said print data at the selected print pitch.

2. A method according to claim 1, characterized in that said step of determining a line start position and a line end position includes eliminating leading and trailing spaces to minimize required movement of said printing element (106).

3. A method according to claim 1 or claim 2, characterized by the step of determining a first value representing the leftmost dot of said print data, determining a second value representing the rightmost dot of said print data, and determining a third value representing the number of dots in said print data, based on the print data and said selected print pitch.

4. A method according to claim 3, characterized in that said step of accessing a lookup table includes comparing said second value to table entries which correspond to said selected print pitch starting from the largest table entry to the smallest to find a table entry (dotstart) value less than or equal to said third value, which entry identifies the rightmost synchronization point.

5. A method according to claim 4, characterized in that said step of accessing a lookup table includes comparing said first value to table entries which correspond to said selected print pitch starting from the smallest table entry to the largest to find a table entry (dotend) value greater than said first value, which entry identifies the leftmost synchronization point.

6. A method according to claim 5, characterized in that said lookup table also defines corresponding steps for a printer stepper motor, and by the steps of accessing said lookup table to determine a motor start value equal to the motor step corresponding to said rightmost synchronization point and a motor end value equal to the motor step corresponding to said leftmost synchronization point.

7. A method according to claim 6 characterized by the step of determining a motor count for said print data stored by subtracting said motor start value from said motor end value.

8. A method according to claim 7, characterized in that said step of moving said printing element (106) includes the step of comparing a current carriage position value to said motor start and motor end values.

9. A method according to claim 8, characterized in that such step of comparing includes the step of compensating for the number of steps required for acceleration or deceleration of said printing element (106).

10. A method according to any one of the preceeding claims, characterized by the steps of selecting a print station for a line of characters to be printed by said printer and transmitting to said printer printer control data identifying said print data, said selected pitch and said selected print station.

**Patentansprüche**

1. Verfahren zum Steuern eines Druckers zum Drucken von Zeichen unter Ansprechen auf Druckdaten, die eine zu druckende Zeichenzeile darstellen, mit den folgenden Schritten:

   Bestimmen einer Zeilenanfangsposition und einer Zeilenendeposition für die Druckdaten als Funktion der Druckdaten und einer aus einer Vielzahl von zum Drucken der Zeichenzeile zu verwendenden Druckteilungen ausgewählten Druckteilung;
   Zugreifen auf eine Nachschlagetabelle zur Bestimmung von Druckersynchronisierungspunkten, ausgehend von der Zeilenanfangsposition und der Zeilenendeposition in Verbindung mit der gewählten Druckteilung, wobei die Zeichenzeile zwischen den Druckersynchronisierungspunkten angeordnet ist;
   Bestimmen des näher an einer momentanen Position eines Druckelementes (106) des Druckers gelegenen Druckersynchronisierungspunktes; und
   Bewegen des Druckelementes (106) zu dem näheren Druckersynchronisierungspunkt, um den Drucker zum Drucken der durch die Druckdaten dargestellten Zeichenzeile in der gewählten Druckteilung vorzubereiten.

2. Verfahren nach Anspruch 1, dadurch gekennzeichnet, daß der Schritt Bestimmen einer Zeilenanfangsposition und einer Zeilenendeposition das Eliminieren von Leerräumen am vorderen und hinteren Ende einschließt, um die erforderliche Bewegung des Druckelementes (106) zu minimieren.

3. Verfahren nach Anspruch 1 oder Anspruch 2, gekennzeichnet durch den Schritt Bestimmen eines ersten Wertes, der den äußersten linken Punkt der Druckdaten darstellt, Bestimmen eines zweiten Wertes, der den äußersten rechten Punkt der Druckdaten darstellt, und Bestimmen eines dritten Wertes, der die Anzahl von Punkten in den Druckdaten basierend auf den Druckdaten und der gewählten Druckteilung darstellt.

4. Verfahren nach Anspruch 3, dadurch gekennzeichnet, daß der Schritt Zugreifen auf eine Nachschlagetabelle das Vergleichen des zweiten Wertes mit Tabelleneinträgen einschließt, die der gewählten Druckteilung entsprechen, ausgehend vom größten Tabelleneintrag bis zum kleinsten, um einen Tabelleneintrags-(Punktanfangs-)wert zu finden, der kleiner oder gleich dem dritten Wert ist, wobei dieser Eintrag den äußersten rechten Synchronisierungspunkt markiert.

5. Verfahren nach Anspruch 4, dadurch gekennzeichnet, daß der Schritt Zugreifen auf eine Nachschlagetabelle das Vergleichen des ersten Wertes mit Tabelleneinträgen einschließt, die der gewählten Druckteilung entsprechen, ausgehend vom kleinsten Tabelleneintrag bis zum größten, um einen Tabelleneintrags-(Punktende-)wert zu finden, der größer ist als der erste Wert, wobei dieser Eintrag den äußersten linken Synchronisierungspunkt markiert.

6. Verfahren nach Anspruch 5, dadurch gekennzeichnet, daß die Nachschlagetabelle auch entsprechende Schritte für einen Druckerschrittmotor definiert, und gekennzeichnet durch die Schritte Zugreifen auf die Nachschlagetabelle, um einen Motorstartwert gleich dem Motorschritt entsprechend dem äußersten rechten Synchronisierungspunkt und einen Motorzielwert gleich dem Motorschritt entsprechend dem äußersten linken Synchronisierungspunkt zu bestimmen.

7. Verfahren nach Anspruch 6, gekennzeichnet durch den Schritt Bestimmen einer Motorzählrate für die gespeicherten Druckdaten durch Subtrahieren des Motorstartwertes von dem Motorzielwert.

**8.** Verfahren nach Anspruch 7, dadurch gekennzeichnet, daß der Schritt Bewegen des Druckelementes (106) den Schritt Vergleichen eines momentanen Schlittenpositionswertes mit dem Motorstart- und dem Motorzielwert einschließt.

**9.** Verfahren nach Anspruch 8, dadurch gekennzeichnet, daß dieser Schritt Vergleichen den Schritt Ausgleichen der Anzahl erforderlicher Schritte zur Beschleunigung oder Verlangsamung des Druckelementes (106) einschließt.

**10.** Verfahren nach einem der vorhergehenden Ansprüche, gekennzeichnet durch die Schritte Auswählen einer Druckstation für eine von dem Drucker zu druckende Zeichenzeile und Übermitteln von Steuerdaten, die die Druckdaten, die gewählte Teilung und die gewählte Druckstation kennzeichnen, an den Drucker.

**Revendications**

**1.** Une méthode pour contrôler une imprimante pour imprimer des caractères en réponse à des données d'impression représentatives d'une ligne de caractères à imprimer, comprenant les étapes suivantes: la détermination d'une position de début de ligne et d'une position de fin de ligne pour lesdites données d'impression en fonction desdites données d'impression et d'une densité d'impression sélectionnée à partir d'une pluralité de densités d'impression à utiliser pour imprimer la ligne de caractères; l'accès à une table d'équivalence pour déterminer les points de synchronisation de l'imprimante de la position de début de ligne et de la position de fin de ligne en combinaison avec la densité d'impression sélectionnée, ladite ligne de caractères étant située entre lesdits points de synchronisation de l'imprimante; la détermination du point de synchronisation de l'imprimante plus proche d'une position actuelle d'un élément d'impression (106) de l'imprimante; et le déplacement dudit élément d'impression (106) au point de synchronisation de l'imprimante plus proche pour préparer l'imprimante pour imprimer la ligne de caractères représentée par lesdites données d'impression à la densité d'impression sélectionnée.

**2.** Une méthode conformément à la revendication 1, caractérisée en ce que ladite étape de la détermination d'une position de début de ligne et d'une position de fin de ligne inclut l'élimination des espaces avant et arrière pour minimiser le déplacement requis dudit élément d'impression (106).

**3.** Une méthode conformément à la revendication 1 ou à la revendication 2, caractérisée par l'étape de la détermination d'une première valeur représentant le point le plus à gauche desdites données d'impression, la détermination d'une deuxième valeur représentant le point le plus à droite desdites données d'impression, et la détermination d'une troisième valeur représentant le nombre de points dans lesdites données d'impression, basée sur les données d'impression et ladite densité d'impression sélectionnée.

**4.** Une méthode conformément à la revendication 3, caractérisée en ce que ladite étape de l'accès à une table d'équivalence comprend la comparaison de ladite deuxième valeur aux entrées de la table qui correspondent à ladite densité d'impression sélectionnée partant de la plus grande entrée de la table à la plus petite pour trouver une valeur d'entrée de la table (début de point) inférieure ou égale à ladite troisième valeur, cette entrée identifiant le point de synchronisation le plus à droite.

**5.** Une méthode conformément à la revendication 4, caractérisée en ce que ladite étape de l'accès à une table d'équivalence comprend la comparaison de ladite première valeur aux entrées de la table qui correspondent à ladite densité d'impression sélectionnée partant de la plus petite entrée de la table à la plus grande pour trouver une valeur d'entrée de la table (fin de point) supérieure à ladite première valeur, cette entrée identifiant le point de synchronisation le plus à gauche.

**6.** Une méthode conformément à la revendication 5, caractérisée en ce que ladite table d'équivalence définit aussi les étapes correspondantes pour un moteur fractionnaire d'imprimante, et par les étapes de l'accès de ladite table d'équivalence pour déterminer une valeur de début de moteur égale à l'étape du moteur correspondant audit point de synchronisation le plus à droite et une valeur de fin de moteur égale à l'étape du moteur correspondant audit point de synchronisation le plus à gauche.

**7.** Une méthode conformément à la revendication 6, caractérisée par l'étape de la détermination d'un comptage de moteur pour lesdites données d'impression stockées en soustrayant ladite valeur de début de moteur à ladite valeur de fin de moteur.

8.  Une méthode conformément à la revendication 7, caractérisée en ce que ladite étape du déplacement dudit élément d'impression (106) comprend l'étape de la comparaison d'une valeur de la position actuelle du chariot auxdites valeurs de début de moteur et de fin de moteur.

9.  Une méthode conformément à la revendication 8, caractérisée en ce qu'une telle étape de la comparaison comprend l'étape de la compensation du nombre d'étapes requis pour l'accélération ou la décélération dudit élément d'impression (106).

10. Une méthode conformément à l'une quelconque des revendications précédentes, caractérisée par les étapes de la sélection d'un poste d'impression pour une ligne de caractères à imprimer par ladite imprimante et de la transmission à ladite imprimante de données de contrôle d'imprimante identifiant lesdites données d'impression, ladite densité d'impression sélectionnée et ledit poste d'impression sélectionné.

EP 0 495 606 B1

RECEIPT AND JOURNAL PRINT ZONES:

JOURNAL PAPER — 102

RECEIPT PAPER — 108

120 — PRINT BUFFER

100

PITCH 0
( 24 CHARS R OR J )

563 → 240 DOTS → 324
24 CHARS

253 → 240 DOTS → 14
24 CHARS

PRINTER CONTROL

PITCH 1
( 28 CHARS R OR J )

659 → 280 DOTS → 380
28 CHARS

299 → 280 DOTS → 20
28 CHARS

114

116

PITCH 2
( 32 CHARS R OR J )

743 → 320 DOTS → 430
32 CHARS

339 → 320 DOTS → 20
32 CHARS

104

106

PRINT CARRIAGE STEPPER MOTOR

PRINT CARRIAGE

112

TERMINAL

118

VALIDATION PRINT ZONES:

VALIDATION FORM ( INSERTED BY OPERATOR )

110

543 | 54 CHARS ←→ 540 DOTS | 4 — PITCH 0

659 | 66 CHARS ←→ 660 DOTS | 0 — PITCH 1

729 | 72 CHARS ←→ 720 DOTS | 10 — PITCH 2

696

MOTOR STEPS | → 24

**FIG. 1**

# FIG. 2

| SYNCH POINT NUMBER | MOTOR STEP NUMBER | PITCH 0 DOT NUMBER | PITCH 1 DOT NUMBER | PITCH 2 DOT NUMBER |
|---|---|---|---|---|
| 0 | 24 | 0 | 0 | 0 |
| 1 | 94 | 60 | 70 | 80 |
| 2 | 164 | 120 | 140 | 160 |
| 3 | 234 | 180 | 210 | 240 |
| 4 | 304 | 240 | 280 | 320 |
| 5 | 374 | 300 | 350 | 400 |
| 6 | 444 | 360 | 420 | 480 |
| 7 | 514 | 420 | 490 | 560 |
| 8 | 584 | 480 | 560 | 640 |
| 9 | 654 | 540 | 630 | 720 |
| 10 | 696 | 576 | 672 | 768 |

EP 0 495 606 B1

# FIG. 3

```
┌─────────────────────┐
│  STORE PRINT DATA :  │ ── 200
│     CHARACTERS       │
│    PITCH - IF NEW    │
│   STATION - IF NEW   │
└─────────────────────┘
          │
          ▼
┌─────────────────────┐
│   RECEIVE PRINT      │ ── 202
│     COMMAND          │
└─────────────────────┘
          │
          ▼
┌─────────────────────┐
│    ELIMINATE         │ ── 204A
│    LEADING           │
│    SPACES            │
└─────────────────────┘
          │
          ▼
┌─────────────────────┐
│    ELIMINATE         │ ── 204B
│    TRAILING          │
│    SPACES            │
└─────────────────────┘
          │
          ▼
┌─────────────────────┐
│    CALCULATE         │ ── 206
│    STARTING &        │
│    ENDING            │
│    DOTS              │
└─────────────────────┘
          │
          ▼
┌─────────────────────┐
│    LOOK UP           │ ── 208
│   SYNC POINTS        │
│   MTR - START        │
│   MTR - END          │
└─────────────────────┘
          │
          ▼
┌─────────────────────┐
│   DETERMINE          │ ── 210
│    PRINT             │
│   DIRECTION          │
│   AND INTIAL         │
│   CARRIAGE           │
│   POSITION           │
└─────────────────────┘
```

15